Europäisches Patentamt

European Patent Office

Office européen des brevets

(11) Publication number: **0 506 960 A1**

(12) **EUROPEAN PATENT APPLICATION**
published in accordance with Art. 158(3) EPC

(21) Application number: 90915193.8

(22) Date of filing: **19.10.90**

(51) Int. Cl.5: **G06F 15/22**

(86) International application number:
**PCT/JP90/01356**

(87) International publication number:
**WO 92/07328 (30.04.92 92/10)**

(43) Date of publication of application:
**07.10.92 Bulletin 92/41**

(84) Designated Contracting States:
**DE FR GB**

(71) Applicant: **KANZAKI PAPER MANUFACTURING COMPANY LIMITED**
**9-8, Ginza 4-chome Chuo-ku**
**Tokyo-to(JP)**

(72) Inventor: **MASAOKA, Takashi, 2-4, Konda**
**Konda-cho Taki-gun**
**Hyogo 669-21(JP)**

(74) Representative: **Patentanwälte Beetz - Timpe - Siegfried - Schmitt-Fumian- Mayr**
**Steinsdorfstrasse 10**
**W-8000 München 22(DE)**

(54) MULTI-PURPOSE DATA PROCESSING METHOD AND APPARATUS.

(57) This invention relates to a multi-purpose data processing method and apparatus which can be implemented at each step of production and transaction of articles such as ordering, production, shipment, and delivery of articles, billing and payment, for example. In the present invention, an output format designation signal which designates one of a plurality of output formats which have been in advance set and stored and a signal representing predetermined variable data in the output format are transmitted over a transmission line. On the reception side, the received variable data is written into the variable data area of the image of the output format on the basis of the output format designation signal and the variable data signal transmitted over the transmission line, and outputted and displayed as one image made two-dimensionally visual. Variable data is added to the received signal or the signal is partly corrected to be sent back to the transmission side, and the transmission side visualizes it and makes necessary addition or correction to variable data, thus providing bidirectional communication and data processing. According to this construction the load on the transmission line can be reduced and a transmission line having a small capacity can be used. Furthermore, multi-purpose data processing can be performed quickly.

## Fig. 1

## Technical Field

The present invention relates to a technology for feeding, transmitting and displaying information at high efficiency in physical distribution, production, transaction and investigation, and also to a technology for reading the displayed information mechanically and converting into electric signals at high efficiency to be utilized in the processing of next stage.

## Background Art

In input, transmission and display processing of information, it is necessary to feed, transmit and display a complete set of information in every format of output, and it takes time in development and input of the related program, and the job for making a group of a series of information to be transmitted is complicated, and moreover the input labor burden and the load of the transmission line are great, and the processing is limited by the capacity of the transmission line.

In the case of converting the information expressed two-dimensionally into serial information, it is forced to compose the word row information by sequentially processing all of it, and the transmission efficiency is limited.

In a certain prior art, not only the merge data in a formulated format, that is, variable data is transmitted, but also the image of the entire format is also transmitted together with the variable data, and therefore it is required to transmit a huge quantity of information through the transmission line.

It is hence a primary object of the invention to provide a method and apparatus for multipurpose information processing capable of transmitting information at high efficiency while lowering the load of the transmission line.

Other objects of the invention will be understood in the following description.

## Disclosure of Invention

The above problem is solved by a method of the invention by multipurpose expression of information for obtaining plural visible outputs satisfying plural objects, by setting plural expression types, that is, output formats at the reception side preliminarily, and repeatedly using the variable data as identical information word row, so that the input labor burden and transmission line load may be alleviated.

Furthermore, in reading and converting processing of two-dimensional information, by deleting and compressing the fixed information portion, and extracting and converting variable information, the composition of transmission information may be assembled efficiently.

The invention provides a method for multipurpose information processing comprising means for transmitting variable data, means for controlling which receives variable data from the transmitting means, and means for visualizing, characterized in that the controlling means contains the information preliminarily preset and stored plural output formats, and that the series of variable data to be transmitted is visualized by visualizing means in plural patterns according to the plural output formats.

The invention is also characterized in that the visualizing means is an electrically excited display device for making a visible display.

The invention is further characterized in that the visualizing means is a printer for obtaining a hard copy.

The invention is furthermore characterized in that the controlling means is combined with reading means, and the variable data obtained by this reading means is given to the controlling means.

The invention is characterized in that the reading means is optical reading means for optically reading the variable data recorded in a recording medium.

The invention is characterized in that the reading means is also reading means for reading, by making use of magnetism, the variable data recorded in a recording medium making use of magnetism.

The invention is characterized in that the reading means is connected electrically to an integrated circuit memory, and reads the variable data stored in this integrated circuit memory.

In the invention, the reading means is characterized by reading the variable data by receiving an electromagnetic wave from means for transmitting variable data by electromagnetic wave.

The invention is further characterized in that the variable data in the output format is visualized and recorded by a character possessing a bar code or predetermined pattern in a recording medium.

The invention is characterized in that the transmitting means is one selected from a group of document transmitting means represented by electromagnetic wave, voltage, current, light signal, sound wave and electronic mail.

In the invention, the visualizing means is characterized in that the information is delivered by arranging two-dimensionally.

In the invention, the controlling means is characterized by returning and transmitting at least a part of the received variable data by directly using through transmitting means, and repeating this returning and transmitting action for a finite number of times.

The invention provides an apparatus for multipurpose information processing comprising:

means for reading, incorporating plural reverse conversion formats whose conversion sequence is preset, for reading visualized information arranged two-dimensionally, converting the read information into electric signals on the basis of the setting of reverse conversion format, and leading out in series bits,

means for transmitting the output of this reading means,

means for controlling which receives variable data from the transmitting means, and

means for visualizing, in which

the controlling means incorporates preset plural sets of output format information, and the series of variable data to be transmitted are visualized by the visualizing means in plural manners according to the regulations of the plural output formats.

The invention also is characterized in that the information to be processed by the reading means is optical visible image.

The invention is characterized in that the information to be processed by the reading means is magnetic image.

The invention is characterized in that the information to be processed by the reading means is latent potential image stored in an integrated circuit memory.

The invention is characterized in that the information to be processed by the reading means is spatial electromagnetic wave.

In the invention, the controlling means of the invention directly utilizes, returns and transmits at least a part of the variable data received from the transmitting means by the transmitting means, the operation of this returning and transmitting is repeated for a finite number of times.

The invention presents also a method for multipurpose information processing comprising the steps of:

transmitting an output format specifying signal for specifying one of the predetermined plural output formats, and a signal for expressing variable data in that output format, and

receiving the output format specifying signal and variable data signal to display the output format specified and preliminarily stored by the output format signal, and to display the variable data expressed by the variable data signal in the predetermined variable data region in the output format.

The invention is characterized in that there are plural variable data regions of output format,

the signals for expressing the variable data in each variable data region are transmitted in predetermined sequence, and

the variable data signals are received to sequentially display in the variable data regions corresponding to the variable data in the output format.

Moreover, the invention provides an apparatus for multipurpose information processing comprising:

means for generating information for specifying one of the predetermined plural types of output formats, and generating variable data in that output format,

a transmission line,

means for transmitting the output from the information generating means to the transmission line,

means for receiving the output format specifying signal through the transmission line and the variable data signal,

means for generating output format for preliminarily storing and generating plural types of output formats,

means for creating an image by responding to the output of the receiving means and writing the received variable data in the variable data region of the output format generated from the output format generating means specified by the received output format signal, and

means for outputting the created image by visualizing, by responding to the output of the image creating means.

The invention is characterized in that the addresses in the output formats in the variable data regions, the number of characters that can be written into each variable data region, and the writing sequence in the variable data region are predetermined in the image creating means, and

the information generating means generates the variable data composed of the number of characters that can be written into each variable data region, in the sequence of the variable data regions to be written in.

The invention also comprises a memory for storing the variable data signals received by the receiving means,

another means for generating information for newly specifying one of the plural output formats, and generating another variable data in the new output format,

another means for transmitting at least a part of the variable data stored in the memory, the new output format from another information generating means, and the other variable data, to the transmission line, and

means for visualizing the image composed by responding to the output from other transmitting means through the transmission line and writing the variable data stored in the memory and other variable data, in the variable data region in the new output format.

According to the invention, when transmitting, the output format specifying signal for specifying one of the output formats, and the signal for expressing the variable data in that output format are sent out, and therefore, the picture element signal of the output format itself is not transmitted, so that the load of the transmission line may be reduced, being not limited by the capacity of the transmission line, and the labor burden for input of output format and variable data may be alleviated, and the signals to be transmitted may be created easily, so that the constitution may be simplified.

At the receiving side, in response to the transmitted output format specifying signal and variable data signal, the preliminarily stored output format specified by the output format signal is displayed, and the variable data expressed by the variable data signal is displayed in the predetermined variable data region in the displayed output format, and thus visualized output format and the variable data incorporated therein may be obtained as a two-dimensional image.

Also according to the invention, there are plural variable data regions of output formats, and when transmitting, the signals showing variable data in each variable data region are transmitted in the predetermined sequence, and when receiving, the variable data received in this sequence are sequentially written and displayed in the variable data regions in the output format. As a result, sequential transmission of variable data will be much easier, and the constitution is simplified, the input load burden is alleviated, and the variable data may be transmitted in quantities if the capacity of the transmission line is small.

In the invention, in the image creating means for creating one image from the received output format signal and received variable data signal, the addresses in the output format of variable data region, the number of characters that can be written in each variable data region, and the writing sequence into the variable data region are predetermined, and by sequentially transmitting the variable data, the variable data may be easily written sequentially into the variable data region in the output format.

The characters include characters, graphic patterns and symbols, and also blank spaces.

According to the invention, moreover, by using part or whole of the received variable data directly, the output format signal and variable data signal may be returned by another transmitting means so as to obtain an image in the same output format as the received output format or other output format, and by so doing, the constitution of the transmission information may be assembled without error and easily.

Thus, according to the invention, by transmitting the output format specifying signal for specifying one of the output formats, and a signal for expressing variable data in that output format, at the receiving side, the variable data is written into the variable data region of the specified output format to be visualized and displayed as a two-dimensional image, so that it is necessary to transmit whole image information and the load of the transmission line may be reduced, and therefore it is not only possible to transmit a huge quantity of information by making use of transmission line of small capacity, but also possible to alleviate the labor burden of input of output format and variable data, and moreover the image of the output format in which variable data are written can be created easily, thereby simplifying the constitution.

In addition, according to the invention, in plural variable data regions in the output format, variable data are sequentially transmitted and written, so that the load of the transmission line may be further lessened.

Still more, in the invention, using at least part of the received variable data, the output format same as or different from the received output format is sent back and transmitted together with the specified signal, and the input load burden in the next operation step is lessened, while input errors are prevented, and secure information transmission is realized.

Brief Description of Drawings

Fig. 1 is a block diagram of an embodiment of the invention,
Fig. 2 is a diagram showing order form 4 and order receipt 16,
Fig. 3 is a diagram showing the composition of a signal transmitted to a transmission line 3,
Fig. 4 is a flow chart for explaining the operation of transmitting signal from processing device 1,
Fig. 5 is a flow chart for explaining the operation after receiving a signal in processing device 2,
Fig. 6 is a flow chart for explaining the operation for receiving the signal from the processing device 2,
Fig. 7 is a block diagram showing a practical composition of external input means 36a,

5

Fig. 8 is a diagram showing estimate form 38,

Fig. 9 is a flow chart for explaining the operation when reading and transmitting the estimate form 38, and

Fig. 10 is a block diagram showing a practical composition of transmitting means 62.

Best Mode for Carrying Out the Invention

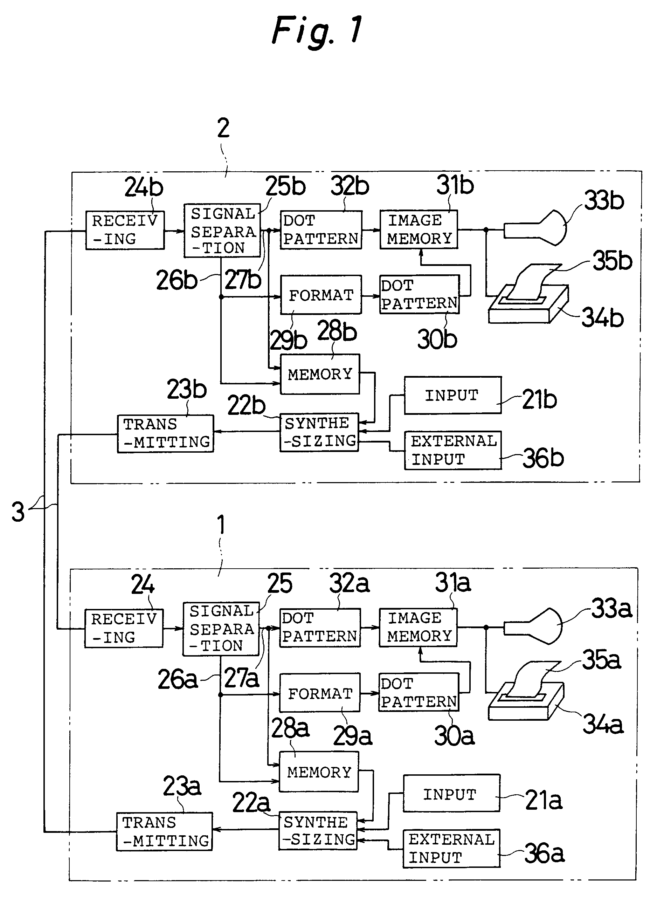

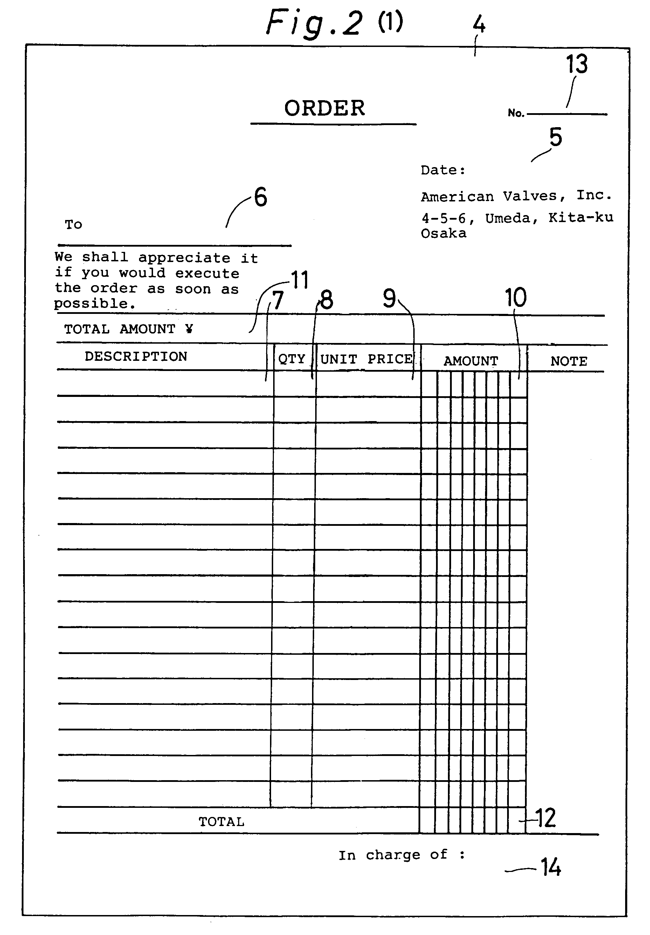

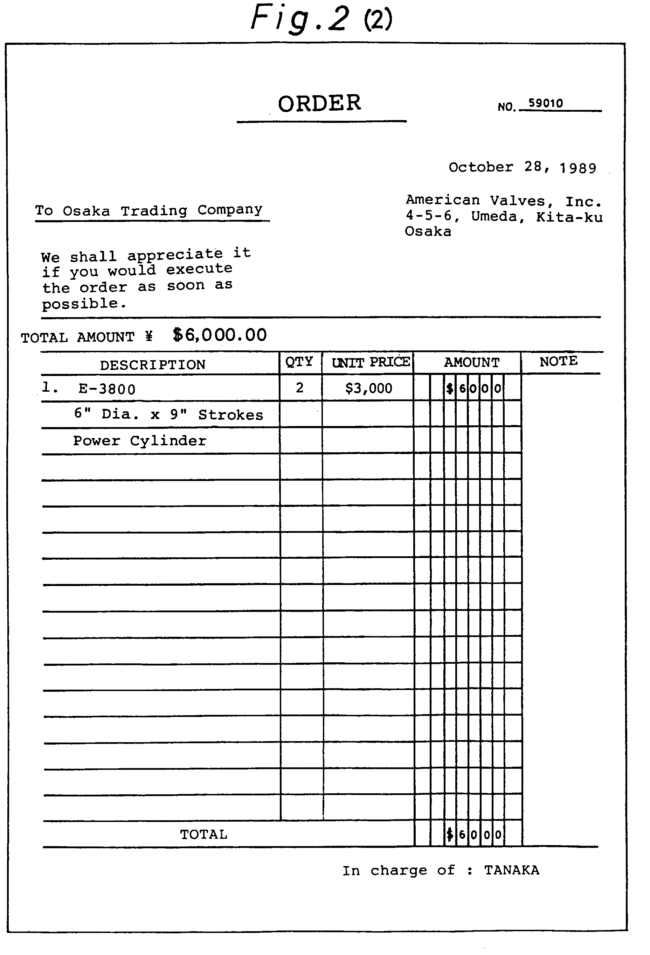

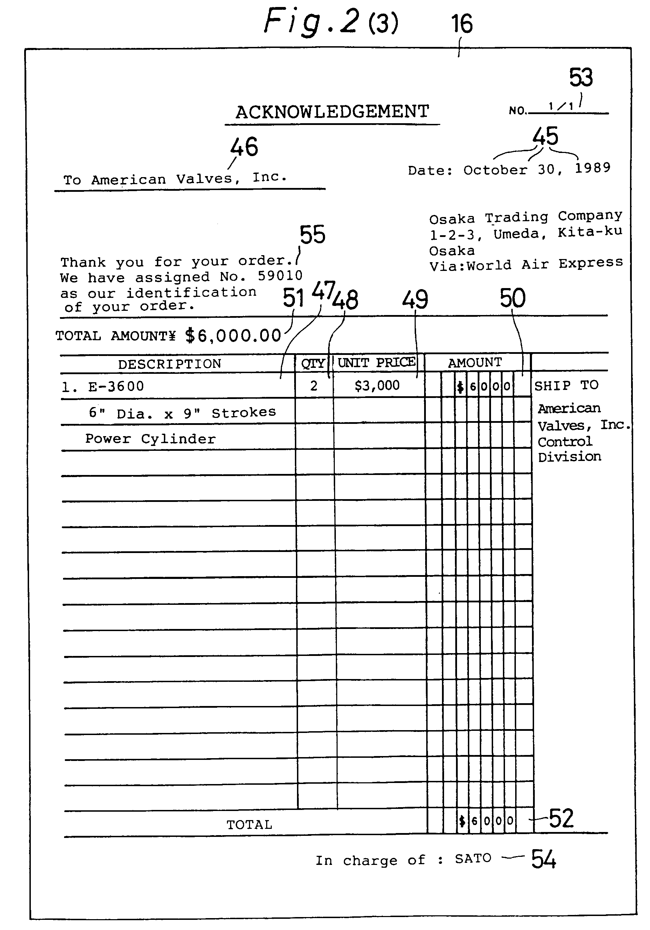

Fig. 1 is an entire block diagram of an embodiment of the invention. In the multipurpose information processing apparatus of the invention, a pair of processing devices 1, 2 capable of transmitting and receiving are connected through a transmission line 3. The transmission line 3 may be electromagnetic wave such as radio wave or light using space as a medium, or electric signal such as voltage and current by the medium of wire, or optical signal through optical fiber. Or sound wave may be also used in this transmission line 3. Still more, the transmission line 3 may be means for conveying documents with or without wire, such as so-called electronic mail. The processing devices 1, 2 are installed, for example, at companies located at a long distance, and an article is ordered from the processing device 1 of one company, and this order information is received in the processing device 2 installed at the other company, and the reception of the order is transmitted to the first company, so that a series of information transmission and processing actions may be conducted. Not limited to ordering of articles, this invention may be realized in production and transaction of articles through the steps of manufacture, distribution, delivery, billing and payment. In the processing device 1 of one company, one of the predetermined plural types of output formats, for example, the output format of order form 4 shown in Fig. 2 (1) is specified. The order form 4 comprises one or plural variable data regions 5 to 14, and the variable data are written in these variable data regions 5 to 14. From the processing device 1, variable data are generated and transmitted. Thus, the order form shown in Fig. 2 (2) is obtained from the processing device 2 at other company. At the other company, from the processing device 2, the information relating to the order receipt 16 shown in Fig. 2 (3) is transmitted to the processing device 1, and the order receipt 16 shown in Fig. 2 (3) is obtained at the processing device 1 at the first company.

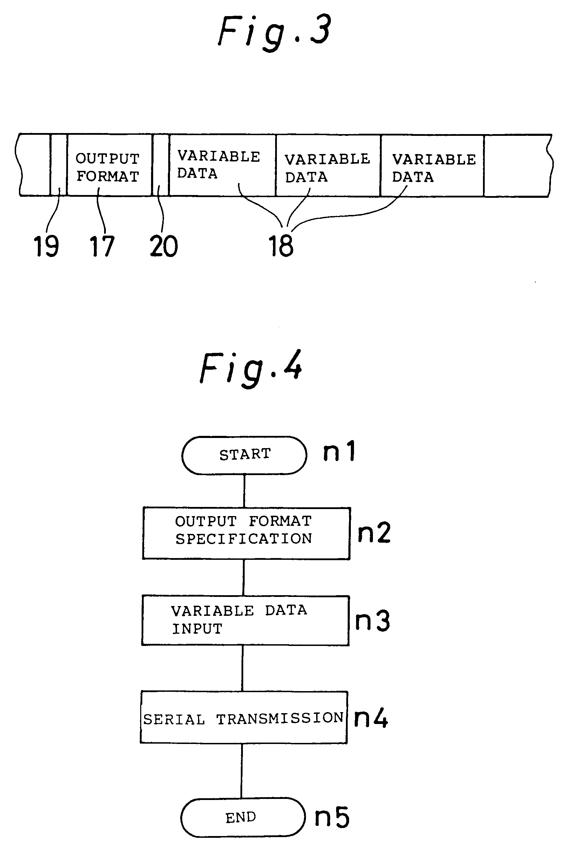

The composition of the signal transmitted from the processing device 1 to the processing device 2 through the transmission line 3 is shown in Fig. 3. An output format specifying signal 17 for specifying the output format of the order form 4 and order receipt 16, and the signal 18 expressing the variable data to be written into variable data regions 6 to 14 (see Fig. 2 (1)) of the output format are transmitted in serial bits. In order to express the output format specifying signal 17, an identification signal 19 is contained before it, and an identification signal 20 for expressing the variable data signal 18 is disposed before it. The transmission line 3, receiving means 24a, 24b, and transmitting means 23a, 23b compose the transmitting means.

Fig. 4 is a flow chart for explaining the action of ordering by the order form 4 from the processing device 1 to the processing device 2. By input means 21a such as keyboard, the specifying signal is fed as shown in Table 1, and the output format is specified. In this embodiment, meanwhile, specifying symbol "F1" is entered in order to specify the output format of the order form 4. The processing device 1 and processing device 2 are substantially in the same composition, and corresponding parts are identified with subscripts a, b attached to the same numbers, but comprehensively, omitting the subscripts a, b, only numerals are indicated.

Table 1

| Specifying symbol | Output format |
|---|---|
| F1 | Order form |
| F2 | Order receipt |
| F3 | Shipping order |
| F4 | Loading slip |
| F5 | Delivery note |
| F6 | Bill |
| F7 | Receive note |
| F8 | Receipt |

At step n3, so as to be written in variable data regions 6 to 4 of order form 4 in the processing device 2, variable data shown in Table 2 are fed in the predetermined input sequence.

Table 2

| Input sequence | Variable data | Variable data region |
|---|---|---|
| 1 | Date of first stage | 5 |
| 2 | Customer | 6 |
| 3 | Product name | 7 |
| 4 | Quantity | 8 |
| 5 | Unit price | 9 |
| 6 | Amount | 10, 11, 12 |
| 7 | Number | 13 |
| 8 | First person in charge | 14 |

A synthesizing circuit 22a of the processing device 1 creates output format specifying signal 17 and variable data signal 18, in response to the output from input means 21a, sends them to transmitting means 23a, so that the transmitting means 23a leads out and transmits the signal possessing the composition shown in Fig. 3 to the transmission line 3. The number of characters that can be written in the variable data regions 6 to 14 is, for example, 30 per line, and these characters include characters, graphic patterns, symbols and blank spaces. In the processing devices 1, 2, by calculating the number of characters, the variable data are distinguished. The variable data are fed by the operator from the input means 21a in the sequence of the variable data regions 6 to 14 to be written in, or in other embodiment, the variable data are entered for the variable data regions after specifying the variable data regions 6 to 14, and after thus input of variable data for variable data regions 6 to 14, it may be also composed to lead out the variable data in the predetermined sequence of the variable data regions 6 to 14 to be written in, from the synthesizing circuit 22a. Thus, as shown in Fig. 3, when the output format specifying signal 17 and variable data 18 are sequentially transmitted and sent to the transmission line 3 in the serial bits, it is not necessary to transmit the whole picture of the order form 4, or it is not needed to transmit the address in the output format of the variable data regions 6 to 14, so that it may be very convenient because the quantity of information to be transmitted is decreased, the load of the transmission line 3 is reduced, and the capacity of the transmission line 3 may be smaller.

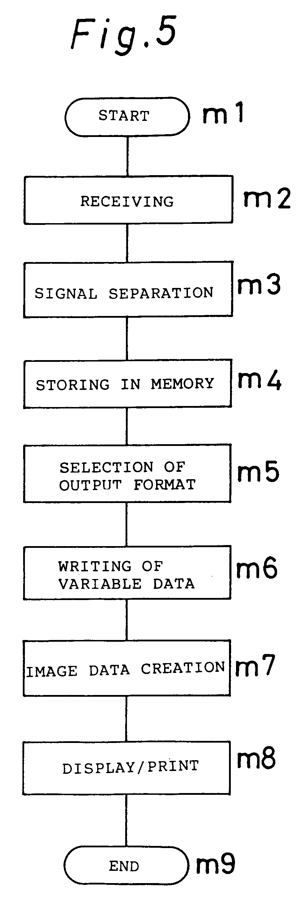

Fig. 5 is a flow chart for explaining the operation for obtaining the order form shown in Fig. 2 (2) at the processing device 2. The signal from the processing device 1 through the transmission line 3 is received at step m2 in receiving means 24b, and at the next step m3, an output format specifying signal 17 is led out from line 26b in the signal separation circuit 25b, and variable data 18 is led out from line 27b. In memory 28b, at step m4, output format specifying signal 17 and variable data signal 18 are stored.

An output format generating circuit 29b responds to the output format specifying signal 17 through the line 26b, and selects the order form 4 shown in Fig. 2 (1) at step m5, and a dot pattern generating circuit 30b generates a dot pattern of an image of this order form 4, and which is given and stored into the image memory 31b. Another dot pattern generating circuit 32b responds to the variable data signal 18 through line 27b, and generates a dot pattern to write variable memory in the position of variable data regions 6 to 14, and which is given to the image memory 31b. Thus, in the image memory 31b, a dot pattern of an image having characters written in the variable data regions 6 to 14 of the order form 4 as output format is obtained, and its content is as shown in Fig. 2 (2). The stored content of the dot pattern of the image memory 31b is visibly displayed by visible display means 33b, or is printed on recording paper 35b by printer 34b. The visible display means 33b may be a cathode-ray tube or liquid crystal display means or the like, or other electrically excited display device. The printer 34b obtains a hard copy on the recording paper 35b as mentioned above. Thus, the order form shown in Fig. 2 (2) is delivered.

From the processing device 2, the information about the order receipt 16 is transmitted, and in order to obtain the order receipt 16 in Fig. 2 (3) at the processing device 1, the output format specifying signal 17 and variable data signal 18 received by the receiving means 24b and separated by the signal separating circuit 25b are stored in the memory 28b, and the operator at the other company having the processing device 2 operates the input means 21b, and enters the specifying symbol "F2" corresponding to the order receipt 16, out of the plural output formats shown in Table 1, and also enters other variable data. The output format of the order receipt 16 possesses variable data regions 45 to 55. Of these variable data regions 45 to 55, the variable data to be written in variable data regions 47 to 52 are same as the content of the memory 28b being received and stored, and only the variable data to be written in variable data regions 45, 46, 53 to 55 are newly entered through the input means 21b. The variable data to be thus entered newly are fed as shown in Table 3 in the predetermined input sequence corresponding to the output format of the order receipt 16.

Table 3

| Input sequence | Variable data | Variable data region |
|---|---|---|
| 1 | Date of second stage | 45 |
| 2 | Customer | 46 |
| 3 | Second person in charge | 54 |
| 4 | Number | 53, 55 |

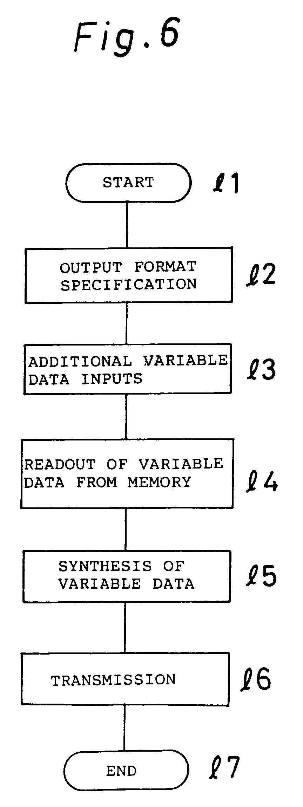

Such transmission operation of information for the order receipt 16 is shown in Fig. 6. At step 2, the output format of the order receipt 16 is specified, and the newly added variable data is entered as shown above. From the memory 28b, variable data necessary for the order receipt 16 of the already stored variable data is read out.

At step 5, in the synthesizing circuit 22b, the newly added variable data and the variable data from the memory 28b are synthesized, and the output format specifying signal for the order receipt 16 is created, and the signal to be transmitted having the same composition as shown in Fig. 3 is created, and is led out from the transmitting means 23b to the transmission line 3.

In the processing device 1, the signal sent out from the processing device 2 through the transmission line 3 is received, and the order receipt 16 is visualized and delivered from the visual display means 33a and printer 34a by the function of the signal separation circuit 25a, output format generating circuit 29a, dot pattern generating circuits 30a, 32a, and image memory 31a. In such constitution, since the content stored in the memory 28b can be directly used, the input labor is saved, and input error may be prevented.

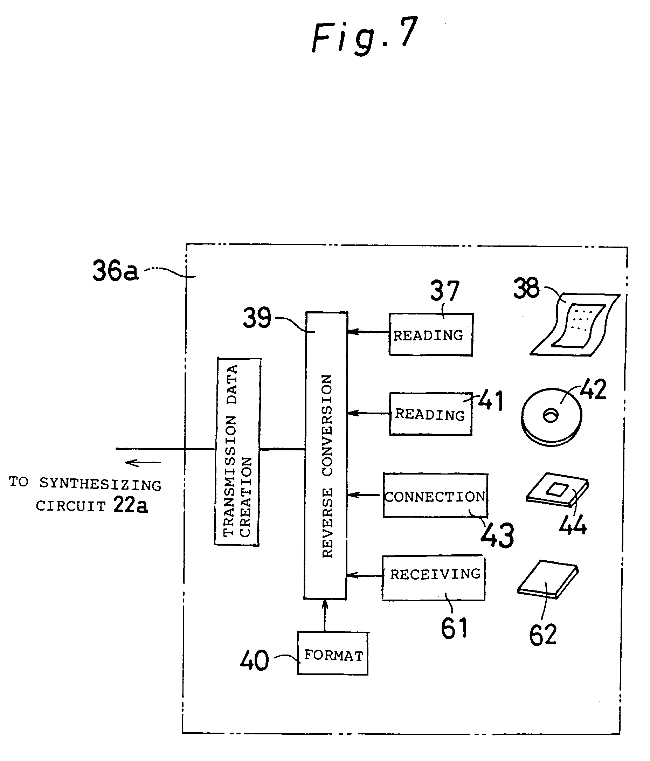

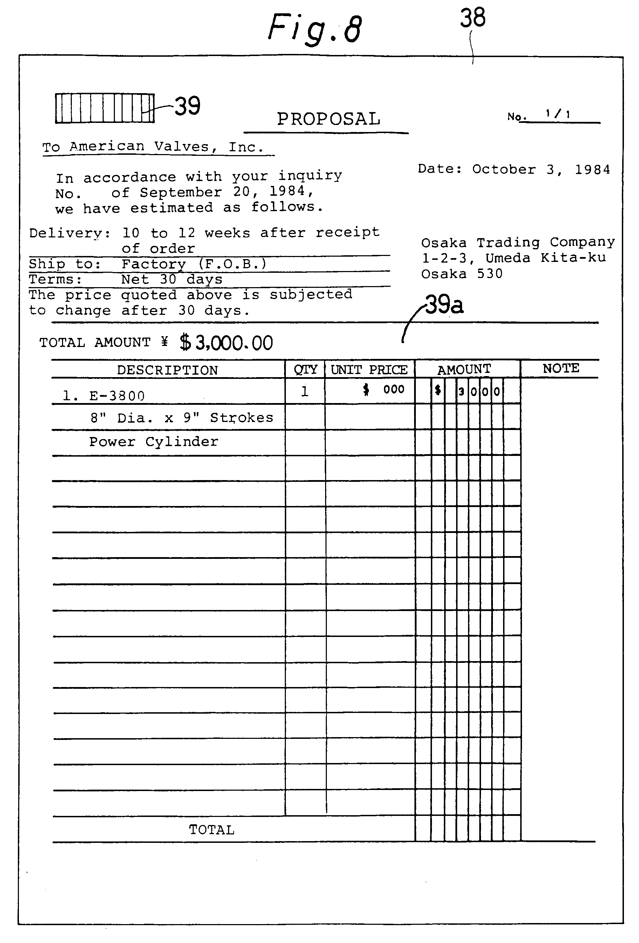

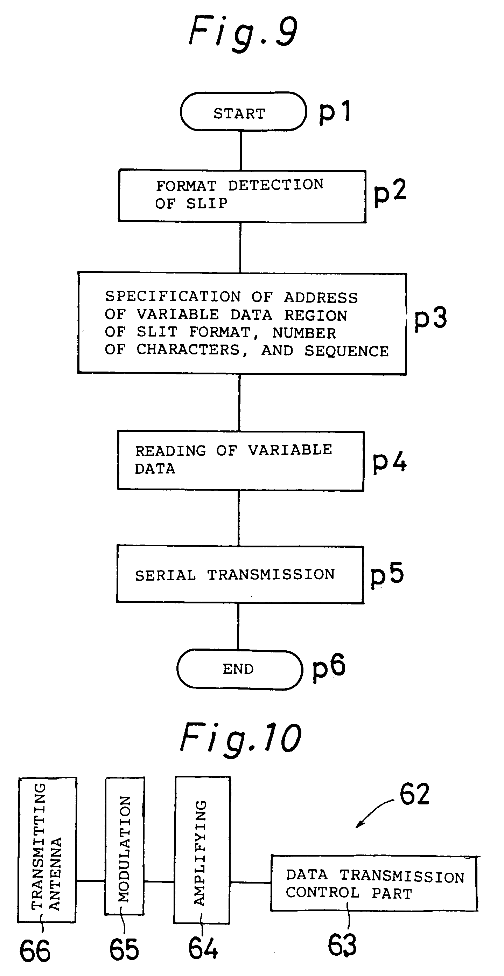

The processing device 1 further comprises reading means 36a. This reading means 36a is composed as shown in Fig. 7. The reading structure 37 is composed so as to optically read the estimate 38 shown in Fig. 8, for example. The estimate 38 is recorded with bar code or character 39 on recording medium such as paper so as to be detectable optically. Such reading structure 37 may be so-called bar code reader or optical character reader (OCR). Thus, the estimate 38 is optically read by the reading structure 37, and the read content is given to the reverse conversion circuit 39. To this reverse conversion circuit 39, the signal showing the output format pattern from the output format generating circuit for reverse conversion 40 is given. Of the plural types of output format pattern given from this circuit 40, it is judged which is the output format of the read slip or the estimate 38, and the operation as shown in Fig. 9 is conducted in the reverse conversion circuit 39.

Moving from step p1 to step p2, the output format of the estimate 38 which is the slip read by the reading structure 37 is detected on the basis of the output from the output format pattern generating circuit for reverse conversion 40, and at the next step p3, the address of the variable data of the output format of that slip, the number of characters written in the variable data region, and the predetermined sequence for reading are specified. At step p4, responding to the output of the reading structure 37, the variable data in the estimate 38 is selectively read. At step p5, the signal 17 for specifying the output format of the estimate 38, and the variable data 18 in the estimate 38 are created, and given to the synthesizing circuit 22a. As a result, the signal having the composition as shown in Fig. 3 is led out from the synthesizing circuit 22a to the transmission line 3 by the function of the transmitting means 23a.

In the estimate 38, variable data may be recorded by bar code, or in predetermined pattern by character as being visualized in the reading standard. Or bar code and character may be combined and recorded. The variable data read out by the reading structure 37 can be varied by the operation of the input means 21a. To express the output format of this estimate 38, the information for specifying the output format may be recorded in the estimate 38, same as variable data, for example by bar code or character.

Another reading structure 41 is composed to read the output format and variable data recorded in magnetic recording medium or optimagnetic recording medium 42, by means of magnetic head or laser beam. Furthermore, connecting means 43 is detachably connected to the integrated circuit memory 44, and the output format and variable data stored in the integrated circuit memory 44 is read out.

Furthermore, a receiving circuit 61 receives an electromagnetic wave from a small transmitting means 62 called electromagnetic wave transmitting card, for example. This transmitting means 62 possesses a processing circuit 63 realized by one-chip integrated circuit as shown in Fig. 10, and the output format and variable data area led out, and the signal is modulated in modulation circuit 64, and amplified by an

8

amplifying circuit 65, and is sent out from a transmitting antenna 66. Such transmitting means 62 is small in size, and is hence portable.

The signals from the reading structure 41, connecting means 43 and receiving circuit 61 are applied, same as mentioned above, to reverse converting circuit 39, and of the reverse conversion output format pattern from the circuit 40, corresponding to the specified output format, variable data is read, and rearranged in serial bits, and applied to a transmission data creating circuit 67.

The hard copy output is presented above for the convenience of prevention of transmission leakage or misunderstanding or retention of confirmation means, considering the character of transactions between companies, and it is not limited to the hard copy output alone, and it is sometimes sufficient with the technique without hard copy depending on the purpose of use, and in such cases the multipurpose expressions of the invention may be preferably achieved by cathode-ray tube or liquid crystal display, but any one of such cases is not known, but it is enough to have the functions of incorporating plural preset display output formats, rearranging the serial transmission information two-dimensionally, and displaying.

The advantages of the above embodiment are listed below.

The first advantage is the lessening of the load of development of software, that is, as clear from the description above, the software development of the individual printout parts is not necessary if the information arraying order and rules of individual output format outputs are preliminarily determined.

The second advantage is that the information transmission is not necessary as for fixed items in the output format preliminarily determined because only variable information is transmitted, so that the load of the transmission line may be alleviated.

The third advantage is that the human input labor is greatly saved because the first information group may be directly used, or the second information group suited to a second purpose of use may be composed only by adding a slight piece of information. Furthermore, the reverse conversion format is incorporated in the mechanical reading means so as to send out serially as information group, the human input labor by using the read first information group is not necessary.

The invention is applied not only in production and distribution of articles, but also widely in other applications. The invention may be changed and modified in various ways, aside from the embodiments described herein by reference to drawings, and the true spirit of the invention should be appreciated on the basis of the description of the claims thereof.

**Claims**

1. A method for multipurpose information processing comprising means for transmitting variable data, means for controlling which receives variable data from the transmitting means, and means for visualizing, characterized in that the controlling means contains the information of preliminarily preset and stored plural output formats, and that the series of variable data to be transmitted is visualized by visualizing means in plural patterns according to the plural output formats.

2. The method as claimed in claim 1, wherein the visualizing means is an electrically excited display device for making a visible display.

3. The method as claimed in claim 1, wherein the visualizing means is a printer for obtaining a hard copy.

4. The method as claimed in claim 1, wherein the controlling means is combined with reading means, and the variable data obtained by this reading means is given to the controlling means.

5. The method as claimed in claim 4, wherein the reading means is optical reading means for optically reading the variable data recorded in a recording medium.

6. The method as claimed in claim 4, wherein the reading means is also reading means for reading, by making use of magnetism, the variable data recorded in a recording medium making use of magnetism.

7. The method as claimed in claim 4, wherein the reading means is connected electrically to an integrated circuit memory, and reads the variable data stored in this integrated circuit memory.

8. The method as claimed in claim 4, wherein the reading means is characterized by reading the variable data by receiving an electromagnetic wave from transmitting means for transmitting variable data by electromagnetic wave.

9.  The method as claimed in claim 5, wherein the variable data in the output format is visualized and recorded by a character possessing a bar code or predetermined pattern in a recording medium.

10. The method as claimed in claim 1, wherein the transmitting means is one selected from a group of document transmitting means represented by electromagnetic wave, voltage, current, light signal, sound wave and electronic mail.

11. The method as claimed in claim 1, wherein the visualizing means is characterized in that the information is delivered by arranging two-dimensionally.

12. The method as claimed in claim 1, wherein the controlling means is characterized by returning and transmitting at least a part of the received variable data by directly using through transmitting means, and repeating this returning and transmitting action for a finite number of times.

13. An apparatus for multipurpose information processing comprising:
    means for reading, incorporating plural reverse conversion formats whose conversion sequence is present, for reading visualized information arranged two-dimensionally, converting the read information into electric signals on the basis of the setting of reverse conversion format, and leading out in series bits,
    means for transmitting the output of this reading means,
    means for controlling which receives variable data from the transmitting means, and
    means for visualizing, in which
    the controlling means incorporates preset plural sets of output format information, and the series of variable data to be transmitted are visualized by the visualizing means in plural manners according to the regulations of the plural output formats.

14. The apparatus as claimed in claim 13, wherein the information to be processed by the reading means is optical visible image.

15. The apparatus as claimed in claim 13, wherein the information to be processed by the reading means is magnetic image.

16. The apparatus as claimed in claim 13, wherein the information to be processed by the reading means is latent potential image stored in an integrated circuit memory.

17. The apparatus as claimed in claim 13, wherein the information to be processed by the reading means is spatial electromagnetic wave.

18. The apparatus as claimed in claim 13, wherein the controlling means of the invention directly utilizes, returns and transmits at least a part of the variable data received from the transmitting means by the transmitting means, the operation of this returning and transmitting is repeated for a finite number of times.

19. A method for multipurpose information processing comprising the steps of:
    transmitting an output format specifying signal for specifying one of the predetermined plural output formats, and a signal for expressing variable data in that output format, and
    receiving the output format specifying signal and variable data signal to display the output format specified and preliminarily stored by the output format signal, and to display the variable data expressed by the variable data signal in the predetermined variable data region in the output format.

20. The method as claimed in claim 19, wherein there are plural variable data regions of output format,
    the signals for expressing the variable data in each variable data region are transmitted in predetermined sequence, and
    the variable data signals are received to sequentially display in the variable data regions corresponding to the variable data in the output format.

21. An apparatus for multipurpose information processing comprising:
    means for generating information for specifying one of the predetermined plural types of output formats, and generating variable data in that output format,

a transmission line,

means for transmitting the output from the information generating means to the transmission line,

means for receiving the output format specifying signal through the transmission line and the variable data signal,

means for generating output format for preliminarily storing and generating plural types of output formats,

means for creating an image by responding to the output of the receiving means, and writing the received variable data in the variable data region of the output format generated from the output format generating means specified by the received output format signal, and

means for outputting the created image by visualizing, by responding to the output of the image creating means.

22. The apparatus as claimed in claim 21, wherein the addresses in the output formats in the variable data regions, the number of characters that can be written into each variable data region, and the writing sequence in the variable data region are predetermined in the image creating means, and

the information generating means generates the variable data composed of the number of characters that can be written into each variable data region, in the sequence of the variable data regions to be written in.

23. The apparatus as claimed in claim 21, which also comprises a memory for storing the variable data signals received by the receiving means,

another means for generating information for newly specifying one of the plural output formats, and generating another variable data in the new output format,

another means for transmitting at least a part of the variable data stored in the memory, the new output format from another information generating means, and the other variable data, to the transmission line, and

means for visualizing the image composed by responding to the output from other transmitting means through the transmission line and writing the variable data stored in the memory and other variable data, in the variable data region in the new output format.

# Fig. 1

## Fig.2 (1)

Figure 2 (1) — ORDER form

4

13

ORDER    No. _____

5

Date:

American Valves, Inc.
4-5-6, Umeda, Kita-ku
Osaka

6

To _____

We shall appreciate it
if you would execute
the order as soon as
possible.

11

7   8   9   10

TOTAL AMOUNT ¥

| DESCRIPTION | QTY | UNIT PRICE | AMOUNT | NOTE |
|---|---|---|---|---|
|  |  |  |  |  |
| TOTAL |  |  |  |  |

12

In charge of :

14

# Fig.2 (2)

## ORDER

NO. 59010

October 28, 1989

American Valves, Inc.
4-5-6, Umeda, Kita-ku
Osaka

To Osaka Trading Company

We shall appreciate it
if you would execute
the order as soon as
possible.

TOTAL AMOUNT ¥  **$6,000.00**

| DESCRIPTION | QTY | UNIT PRICE | AMOUNT | | | | | NOTE |
|---|---|---|---|---|---|---|---|---|
| 1.  E-3800 | 2 | $3,000 | $ | 6 | 0 | 0 | 0 | |
| 6" Dia. x 9" Strokes | | | | | | | | |
| Power Cylinder | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| TOTAL | | | $ | 6 | 0 | 0 | 0 | |

In charge of : TANAKA

## *Fig.2* (3)  16

53

### ACKNOWLEDGEMENT

NO. 1/1

46

To American Valves, Inc.

45

Date: October 30, 1989

55

Thank you for your order.
We have assigned No. 59010
as our identification
of your order.

51 47 48   49   50

Osaka Trading Company
1-2-3, Umeda, Kita-ku
Osaka
Via:World Air Express

TOTAL AMOUNT¥ $6,000.00

| DESCRIPTION | QTY | UNIT PRICE | AMOUNT | |
|---|---|---|---|---|
| 1. E-3600 | 2 | $3,000 | $ 6 0 0 0 | SHIP TO |
|   6" Dia. x 9" Strokes | | | | American Valves, Inc. |
|   Power Cylinder | | | | Control Division |
| | | | | |
| TOTAL | | | $ 6 0 0 0 | 52 |

In charge of : SATO — 54

# Fig.3

| | OUTPUT FORMAT | | VARIABLE DATA | VARIABLE DATA | VARIABLE DATA | |

19   17   20   18

# Fig.4

START   n1

OUTPUT FORMAT
SPECIFICATION   n2

VARIABLE DATA
INPUT   n3

SERIAL TRANSMISSION   n4

END   n5

# Fig.5

```
     ┌─────────────┐
    ( START )  m1
     └─────────────┘
           │
    ┌─────────────┐
    │  RECEIVING  │  m2
    └─────────────┘
           │
    ┌──────────────────┐
    │ SIGNAL SEPARATION │  m3
    └──────────────────┘
           │
    ┌──────────────────┐
    │ STORING IN MEMORY │  m4
    └──────────────────┘
           │
    ┌──────────────────┐
    │   SELECTION OF   │  m5
    │  OUTPUT FORMAT   │
    └──────────────────┘
           │
    ┌──────────────────┐
    │    WRITING OF    │  m6
    │  VARIABLE DATA   │
    └──────────────────┘
           │
    ┌────────────────────┐
    │ IMAGE DATA CREATION │  m7
    └────────────────────┘
           │
    ┌──────────────────┐
    │  DISPLAY/PRINT   │  m8
    └──────────────────┘
           │
     ┌─────────────┐
    (  END  )  m9
     └─────────────┘
```

17

# Fig.6

```
        ┌─────────────────┐
       (      START        )  ℓ1
        └─────────────────┘
                 │
        ┌─────────────────┐
        │  OUTPUT FORMAT   │  ℓ2
        │  SPECIFICATION   │
        └─────────────────┘
                 │
        ┌─────────────────┐
        │ADDITIONAL VARIABLE│ ℓ3
        │ DATA INPUTS       │
        └─────────────────┘
                 │
        ┌─────────────────┐
        │READOUT OF VARIABLE│ ℓ4
        │DATA FROM MEMORY   │
        └─────────────────┘
                 │
        ┌─────────────────┐
        │  SYNTHESIS OF    │  ℓ5
        │  VARIABLE DATA   │
        └─────────────────┘
                 │
        ┌─────────────────┐
        │  TRANSMISSION    │  ℓ6
        └─────────────────┘
                 │
        ┌─────────────────┐
       (       END         )  ℓ7
        └─────────────────┘
```

# Fig.7

# Fig.8

38

PROPOSAL

No. 1 / 1

To American Valves, Inc.

In accordance with your inquiry
No.   of September 20, 1984,
we have estimated as follows.

Date: October 3, 1984

Delivery: 10 to 12 weeks after receipt
          of order

Ship to:   Factory (F.O.B.)

Terms:     Net 30 days

The price quoted above is subjected
to change after 30 days.

Osaka Trading Company
1-2-3, Umeda Kita-ku
Osaka 530

39a

TOTAL AMOUNT ¥ $3,000.00

| DESCRIPTION | QTY | UNIT PRICE | AMOUNT | | | | NOTE |
|---|---|---|---|---|---|---|---|
| 1. E-3800 | 1 | $ 000 | $ | 3 | 0 | 0 0 | |
| 8" Dia. x 9" Strokes | | | | | | | |
| Power Cylinder | | | | | | | |
| | | | | | | | |
| | | | | | | | |
| | | | | | | | |
| | | | | | | | |
| | | | | | | | |
| | | | | | | | |
| | | | | | | | |
| | | | | | | | |
| | | | | | | | |
| | | | | | | | |
| | | | | | | | |
| | | | | | | | |
| | | | | | | | |
| TOTAL | | | | | | | |

## Fig.9

```
        ( START )  p1
            │
  ┌──────────────────┐
  │ FORMAT DETECTION │  p2
  │ OF SLIP          │
  └──────────────────┘
            │
  ┌──────────────────────┐
  │ SPECIFICATION OF ADDRESS │
  │ OF VARIABLE DATA REGION  │  p3
  │ OF SLIT FORMAT, NUMBER   │
  │ OF CHARACTERS, AND SEQUENCE │
  └──────────────────────┘
            │
  ┌──────────────────┐
  │ READING OF VARIABLE │  p4
  │ DATA             │
  └──────────────────┘
            │
  ┌──────────────────┐
  │ SERIAL TRANSMISSION │  p5
  └──────────────────┘
            │
        ( END )  p6
```

## Fig.10

```
┌────────────┐  ┌────────────┐  ┌────────────┐        ┌──────────────────┐
│ TRANSMITTING│  │ MODULATION │  │ AMPLIFYING │────────│ DATA TRANSMISSION │
│ ANTENNA    │  │            │  │            │        │ CONTROL PART     │
└────────────┘  └────────────┘  └────────────┘        └──────────────────┘
     66              65              64                        63

                                                   ╱ 62
```

# INTERNATIONAL SEARCH REPORT

International Application No  PCT/JP90/01356

## I. CLASSIFICATION OF SUBJECT MATTER (if several classification symbols apply, indicate all) 6

According to International Patent Classification (IPC) or to both National Classification and IPC

Int. Cl$^5$    G06F15/22

## II. FIELDS SEARCHED

### Minimum Documentation Searched 7

| Classification System | Classification Symbols |
|---|---|
| IPC | G06F15/21-15/22 |

### Documentation Searched other than Minimum Documentation to the Extent that such Documents are Included in the Fields Searched 8

Jitsuyo Shinan Koho             1926 - 1989
Kokai Jitsuyo Shinan Koho       1971 - 1989

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 64-7167 (Toshiba Corp.), January 11, 1989 (11. 01. 89) | 1-23 |
| Y | JP, A, 63-305460 (Hitachi, Ltd.), December 13, 1988 (13. 12. 88) | 1-23 |
| Y | JP, A, 61-201539 (Mitsubishi Electric Corp.), September 6, 1986 (06. 09. 86) | 1-23 |
| Y | JP, A, 61-204766 (NEC Corp.), September 10, 1986 (10. 09. 86) | 1-23 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| December 6, 1990 (06. 12. 90) | December 25, 1990 (25. 12. 90) |

| International Searching Authority | Signature of Authorized Officer |
|---|---|
| Japanese Patent Office | |

Form PCT/ISA/210 (second sheet) (January 1985)